# EUROPÄISCHE PATENTANMELDUNG

(11) **EP 1 965 557 A1**
(43) Veröffentlichungstag der Anmeldung: **03.09.2008**
(21) Anmeldenummer: 07004379.9
(22) Anmeldetag: 02.03.2007
(51) Int. Cl.: H04L 29/06

(54) **Verfahren zum Durchführen einer Netzanmeldung in einem Funkkommunikationssystem**

(71) Anmelder: Siemens Networks GmbH & Co. KG, 81541 München (DE)
(72) Erfinder: Kröselberg, Dirk, 80469 München (DE)
(74) Vertreter: Maier, Daniel Oliver

(57) **Zusammenfassung**

Die Erfindung betrifft ein Verfahren zum Durchführen einer Netzanmeldung in einem Funkkommunikationssystem mit den Schritten Realisieren eines nicht-authentisierten Netzzugangs (S1 bis S6), Markieren des Netzzugangs als nicht-authentisiert, Durchführen einer Authentisierung des Benutzers und/oder Geräts über den nicht-authentisierten Netzzugang (S7, S8) und Ändern der Markierung des Netzzugangs als authentisiert sowie Zuordnung des authentisierten Benutzers und/oder Geräts zum nicht-authentisierten Netzzugang, wenn die Authentisierung des Benutzers und/oder Geräts erfolgreich war.

## Beschreibung

Die vorliegende Erfindung bezieht sich auf ein Verfahren zum Durchführen einer Netzanmeldung in einem Funkkommunikationssystem und insbesondere auf ein Verfahren zum Durchführen einer authentisierten Netzanmeldung in z.B. einem WiMAX- oder WLAN-Kommunikationssystem.

Die Erfindung wird nachstehend anhand eines sogenannten WiMAX-Netzes beschrieben, wie es vom WiMAX-Forum definiert ist und auf dem Standard IEEE802.16 basiert. Selbstverständlich sind alternative Funkkommunikationssysteme wie beispielsweise WLAN usw. in ähnlicher Weise geeignet.

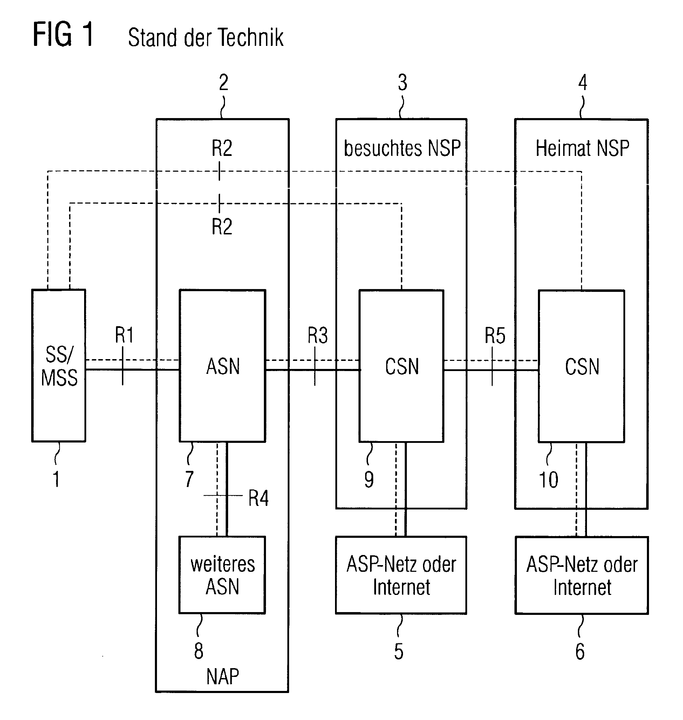

Die Network Working Group (NWG) des WiMAX-Forums legt in ihrem Spezifikationsentwurf "NWG Stage-3" unter anderem die Netzwerkarchitektur für WiMAX-Netze fest, wie sie beispielsweise in Figur 1 vereinfacht dargestellt ist.

Die Figur 1 zeigt eine vereinfachte Blockdarstellung einer WiMAX NWG Referenz-Architektur, wie sie beispielsweise als Funkkommunikationssystem vorliegen kann. Gemäß Fig. 1 kann ein Endgerät 1 über einen Referenzpunkt R1 mit einem Zugangsnetz 7 verbunden sein. Das Endgerät 1 ist beispielsweise eine Teilnehmerstation SS (Subscriber Station) oder eine mobile Teilnehmerstation MSS (Mobile Subscriber Station). Das Zugangsnetz 7 (ASN, Access Service Networks) wird von einem Netzzugangsanbieter 2 (NAP, Network Access Provider oder AP, Access Provider) betrieben, der weitere Zugangsnetze wie beispielsweise das Zugangsnetz 8 aufweisen kann. Die Zugangsnetze 7 und 8 bzw. ASN sind in eine Vielzahl von (nicht dargestellten) Basisstationen BS und einem Zugangsnetz-Gateway bzw. ASN-Gateway ASN-GW untergliedert. Die Luftschnittstelle zwischen dem Endgerät 1 bzw. der Teilnehmerstation SS/MSS und einer Basisstation BS des Zugangsnetzes 7 bzw. ASN wird beispielsweise im Standard IEEE802.16 spezifiziert.

Über den Referenzpunkt R3 ist das Zugangsnetz 7 beispielsweise mit einem Connectivity Service Network 9 (CSN) verbunden, das von einem Netzanbieter (NSP, Network Service Provider) eines besuchten Netzes bzw. einem besuchten Netzanbieter (NSP) betrieben wird. Die Connectivity Service Networks 9 unterstützen hierbei die Zugangsnetze 7 bei der Authentisierung der Endgeräte 1, wobei sie diese beispielsweise mit IP-Adressen versorgen und den Zugang zu IP-basierten Netzen 5 und 6, wie z.B. dem Internet oder einem Application Service Provider Netz (ASP), bereitstellen. Da es sich bei dem Connectivity Service Network 9, mit dem das Endgerät 1 über das Zugangsnetz 7 verbunden ist, nicht notwendigerweise um ein Connectivity Service Network 10 eines Heimat-Netzanbieters 4 bzw. Heimat-NSP (Network Service Provider) handeln muss (also um das Connectivity Service Network 10, das eine Dienstenutzung des Endgeräts 1 vergebührt), sind gemäß Figur 1 beispielsweise die zwei Connectivity Service Networks 9 und 10 des Heimat-Netzanbieters 4 und des besuchten Netzanbieters 3 über den Referenzpunkt R5 miteinander verbunden. Ferner ist das Endgerät 1 über Referenzpunkte R2 bzw. zweite Schnittstellen in der WiMAX-Architektur mit den Connectivity Service Networks 9 und 10 des Heimat-Netzanbieters 4 und des besuchten Netzanbieters 3 verbunden.

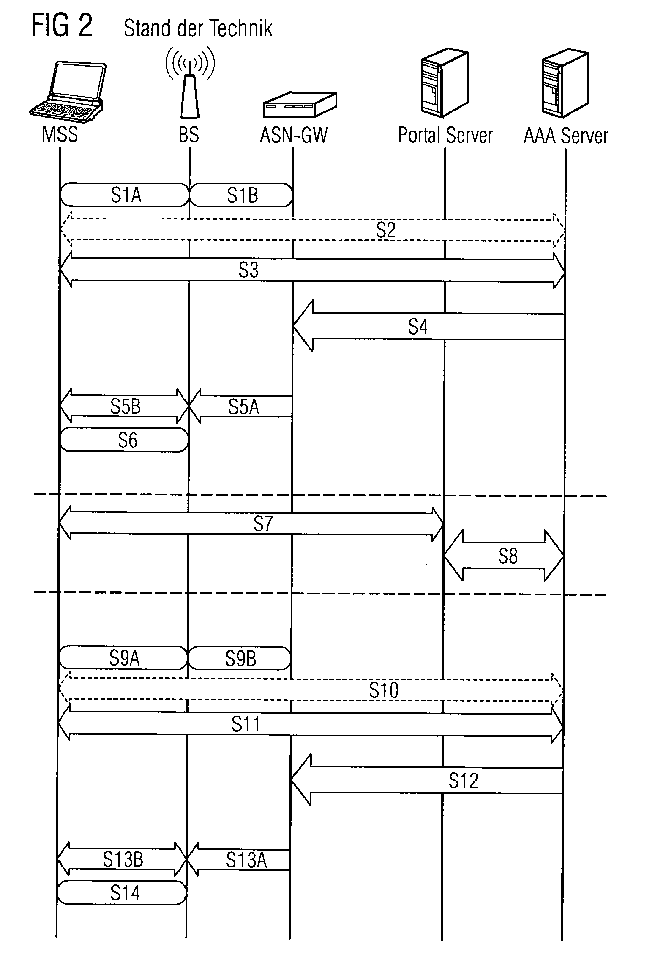

Figur 2 zeigt ein vereinfachtes Statusdiagramm zur Veranschaulichung einer herkömmlichen WiMAX NWG Netzanmeldung, wie sie beispielsweise in dem in Figur 1 dargestellten WiMAX Kommunikationssystem durchgeführt werden kann. Gleiche Bezugszeichen bezeichnen hierbei gleiche oder ähnliche Elemente wie in Figur 1.

Genauer gesagt handelt es sich bei dem Endgerät 1 um ein mobiles Teilnehmerendgerät MSS (Mobile Subscriber Station), das über eine Funkschnittstelle mit einer Basisstation BS und einem zugehörigen Zugangsnetz-Gateway ASN-GW (Access Service Network-Gateway) eines Zugangsnetzes verbunden ist. Weiterhin ist ein Portalserver zur Realisierung einer beispielsweise HTML-Portalseite dargestellt sowie ein netzseitiger AAA-Server (Authorization, Authentication, Accounting), der für eine jeweilige Anmeldung des mobilen Endgeräts MSS verwendet wird.

Dem Funkteilnehmer bzw. dem Endgerät MSS wird beispielsweise unter Verwendung des "Dynamic Host Configuration Protocol, DHCP" eine IP-Adresse individuell zugeordnet, die an den Funkteilnehmer übertragen wird. Seitens des AAA-Servers wird im Rahmen der als "Authorization" bezeichneten Berechtigungsüberprüfung festgelegt, auf welche angebotenen Dienste der Funkteilnehmer zugreifen darf. Abhängig von einem dem Funkteilnehmer zugeordneten "User Authorization Level" wird dem Funkteilnehmer eine vorbestimmte Informationsmenge zur Verfügung gestellt. Im Rahmen eines als "Authentication" bezeichneten Anmeldungsvorgangs wird üblicherweise für jeden Funkteilnehmer eine Kombination aus Benutzername und Schlüssel (z.B. Passwort, symmetrische Schlüssel oder asymmetrische Schlüssel und Zertifikat) verwendet. Im Rahmen eines als "Accounting" bezeichneten Abbuchungsverfahrens werden Zugriffszeiten und Zugriffe auf Internetseiten registriert. Mit Hilfe der erfassten "Accounting"-Daten wird ermöglicht, beispielsweise Trendanalysen, Kapazitätsplanungen, Gebührenberechnungen, Kostenzuordnungen und Systemprüfungen durchzuführen. Hinsichtlich der weiteren technischen Details wird insbesondere auf den Standard IEEE802.16 sowie den WiMAX-Spezifikationsentwurf NWG Stage-3 verwiesen.

Gemäß Figur 2 wird zunächst in einem Schritt S1A und einem Schritt S1B eine Verbindung vom mobilen Endgerät MSS zum Zugangsnetz bzw. dessen Basisstation BS und dessen Zugangsnetz-Gateway ASN-GW geschaffen. Der Schritt S1A stellt hierbei einen Link-Setup gemäß IEEE802.16e dar, wobei in Schritt S1B eine entsprechende Linkaktivierung (Link Aktivation) zwischen der Basisstation BS und dem zugehörigem Zugangsnetz-Gateway ASN-GW durchgeführt wird.

In einem optionalen Schritt S2 kann eine Geräte-Authentisierung mittels z.B. eines EAP-Verfahrens (Extensible Authentication Protocol) durchgeführt werden.

Das "Extensible Authentication Protocol, EAP" bezeichnet hierbei ein Protokoll zur Realisierung einer "Link-Layer"-Sicherheit. Dabei authentisiert ein Heimatnetzwerk, bei dem der Funkteilnehmer bekannt bzw. angemeldet ist, gegenüber einem anfragenden WiMAX-Netz oder WLAN-Netz den Funkteilnehmer, dem nachfolgend der Zugriff auf das WiMAX-Netz oder WLAN-Netz erlaubt wird, und umgekehrt. Dieses Verfahren bietet beispielsweise den Vorteil einer netzübergreifenden Gebührenabrechnung, wobei auf zusätzliche Gebührenmittel wie beispielsweise "Prepaid"-Karten oder ähnliches verzichtet werden kann. Im Einzelnen meldet sich der Funkteilnehmer MSS als Gast bei einem Zugangsnetz des WiMAX-Netzes oder WLAN-Netzes an. Dazu verwendet er beispielsweise ein sogenanntes "Extensible Authentication Protocol-Tunneled Transport Layer Security EAP-TTLS" zur Authentisierung. Der Funkteilnehmer authentisiert sich im Rahmen dieser EAP-Methode aber nicht gegenüber dem WiMAX Netz; das Netz kann sich gegenüber dem Teilnehmer authentisieren. Weitere Eingaben zur Authentisierung sind hierbei nicht nötig. Damit kann der Funkteilnehmer eine anonyme, nicht personenbezogene Authentisierung durchführen.

Gemäß Figur 2 wird im Schritt S3 ein derartiger nicht-authentisierter EAP-Zugriff vom mobilen Teilnehmer MSS auf das Netz bzw. bis zum AAA-Server durchgeführt. Das ASN-GW übernimmt dabei die für EAP erforderliche Funktion des Authenticators. In einem Schritt S4 wird vom AAA-Server dem Authenticator im Zugangsnetz bzw. dem zugehörigen Zugangsnetz-Gateway ASN-GW der Erfolg dieses nicht-authentisierten EAP-Zugriffs mitgeteilt und beispielsweise ein MSK-Schlüssel oder weitere Schlüssel zur Verfügung gestellt. Auf der Grundlage dieses Schlüsselmaterials wird daraufhin in einem Schritt S5A beispielsweise ein Schlüssel AK der Basisstation BS zur Verfügung gestellt und weiter beispielsweise ein Schlüssel TEK dem mobilen Teilnehmer MSS zur Verfügung gestellt. Die Details für diese Vorgänge sind wiederum beispielweise im IEEE-Standard 802.16-2005 explizit beschrieben, weshalb auf eine detaillierte Beschreibung nachfolgend verzichtet wird. Auf diese Weise erhält man in einem Schritt S6 eine gesicherte Schicht-2-Kommunikation (Layer 2 Communication) zwischen dem mobilen Teilnehmer MSS und der Basisstation BS des Zugangsnetzes und somit dem daran angeschalteten WiMAX-Netz.

In einem Schritt S7 erfolgt nunmehr unter Verwendung des realisierten nicht-authentisierten Netzzugangs ein Zugriff auf den Portal-Server, wobei eine Anmeldung durchgeführt werden kann und dem Benutzer Subskriptionsdaten bereitgestellt werden. Diese Subskriptionsdaten können im Schritt 8 vom Portal-Server dem AAA-Server zur Verfügung gestellt werden.

In den Schritten S9 bis S14 erfolgt nunmehr eine erneute Anmeldung des Funkteilnehmers unter Verwendung der erhaltenen Subskriptionsdaten, wodurch man nunmehr einen authentisierten Netzzugang erhält.

Genauer gesagt wird in den Schritten S9A und S9B wiederum ein Link Setup gemäß IEEE802.16e durchgeführt und zwischen der Basisstation BS und dem Gateway ASN-GW eine Linkaktivierung (Link Activation) hergestellt. Wiederum kann in einem optionalen Schritt S10 mittels z.B. des EAP-Protokolls ein Geräteauthentisierungsschritt durchgeführt werden.

In einem Schritt S11 erfolgt nunmehr ein authentisierter Netzzugang mittels beispielsweise EAP-Zugriff, wobei in einem Schritt S12 vom AAA-Server die erfolgreiche Anmeldung unter Verwendung der Subskriptionsdaten bestätigt wird und das zugehörige Schlüsselmaterial wie beispielsweise ein MSK-Schlüssel und weitere Schlüssel dem Gateway ASN-GW zur Verfügung gestellt werden.

Dieses liefert seinerseits in einem Schritt S13A beispielsweise einen AK-Schlüssel an die Basisstation BS und in einem Schritt S13B mittels IEEE802.16 3-way handshake z.B. den TEK-Schlüssel an das mobile Endgerät MSS. Im Schritt S14 erhält man somit eine gesicherte Schicht 2 Kommunikation auf der Grundlage der erhaltenen Subskriptionsdaten bzw. des authentisierten Zugangs.

Der bisher bekannte Lösungsansatz für nicht-authentisierten Netzzugang zu beispielsweise einem WiMAX-Netz entsprechend der WiMAX-Spezifikation NWG Stage-3, ist demzufolge der, eine sogenannte getunnelte EAP-Methode wie z.B. EAP-TTLS oder EAP-PAP zu verwenden und nur das Zugangsnetz gegenüber dem Benutzer zu authentisieren, nicht jedoch den Benutzer gegenüber dem Zugangsnetz. Grundsätzlich wäre auch ein anonymer EAP-Lauf denkbar, bei dem sich weder das Zugangsnetz noch der Benutzer authentisiert. Dies ermöglicht einen Zugang für neue Benutzer, die für die Nutzung eines WiMAX-Netzes und der darüber verfügbaren Dienste noch über keine Subskriptionsdaten verfügen.

Zum Ausstellen solcher Subskriptionsdaten wird nach dem Stand der Technik nach einem nicht-authentisierten Netzzugang oder einem Zugang, bei dem die Funkstrecke komplett ungeschützt bleibt (dies wäre z.B. bei WLAN-Netzen der Fall) auf eine spezielle Portalseite (z.B. eine Webseite) verwiesen, auf die der Benutzer geleitet wird. Dort registriert sich der Benutzer bzw. bezahlt den Netzzugang und erhält seine Subskriptionsdaten. Der Benutzer verlässt nach erfolgreicher Kommunikation der vom Portal-Server bereitgestellten Portalseite und nach Erhalt seiner Subskriptionsdaten das WiMAX-Netz.

Beim Stand der Technik muss sich daraufhin der Benutzer komplett neu am Netz anmelden, diesmal mit einer Authentisierung, die er nun mit den erhaltenen Subskriptionsdaten durchführen kann.

Dieser Ansatz hat den deutlichen Nachteil, dass sich ein Benutzer zweimal aufeinanderfolgend am Netz anmelden muss, was sowohl die Dauer des Anmeldeprozesses deutlich erhöht, als auch die Ressourcen des Netzes (wie beispielsweise eine Performance oder Bandbreite) sowie die des Endgeräts (wie z.B. eine Akku-Laufzeit) belastet.

Der Erfindung liegt daher die Aufgabe zugrunde, ein Verfahren zum Durchführen einer Netzanmeldung in einem Funkkommunikationssystem zu schaffen, welches einfach und ressourcensparend ist.

Erfindungsgemäß wird diese Aufgabe durch die Maßnahmen des Patentanspruchs 1 gelöst.

Insbesondere wird zunächst ein nicht-authentisierter Netzzugang realisiert, anschließend eine dem Netzzugang zugeordnete Markierung als nicht-authentisiert gesetzt, ferner eine Authentisierung des Benutzers und/oder des Geräts über den nicht-authentisierten Netzzugang durchgeführt, der authentisierte Benutzer und/oder das Gerät dem nicht-authentisierten Netzzugang zugeordnet und abschließend die dem Netzzugang zugeordnete Markierung als authentisiert aktualisiert, wenn eine Authentisierung des Benutzers und/oder des Geräts erfolgreich war. Im Gegensatz zum Stand der Technik muss sich nunmehr der Nutzer nicht länger zweimal aufeinanderfolgend am Netz anmelden, was sowohl die Dauer des Anmeldeprozesses deutlich erhöht als auch die Ressourcen des Netzes sowie des Endgeräts unnötig belastet, sondern kann den "Overhead" der zweiten Netzanmeldung deutlich reduzieren. Dadurch ergibt sich neben der verbesserten Nutzung der Ressourcen der Funkschnittstelle insbesondere eine signifikante Verbesserung des Benutzerempfindens bzw. der sogenannten "User Experience" bei der Netzanmeldung.

Beispielsweise kann das Setzen/Ändern der dem Netzzugang zugeordneten Markierung in einem AAA-Server und davon abhängig in einem Zugangsnetz durchgeführt werden, wodurch eine netzübergreifende Verwaltung bzw. die Verwaltung von unterschiedlichen Netzen hinsichtlich einer Authentisierung effizient durchgeführt werden kann.

Beispielsweise kann der nicht-authentisierte Netzzugang eine basierend auf dem nicht authentisierten EAP gesicherte Kommunikation oder eine ungesicherte Kommunikation aufweisen, wodurch den unterschiedlichsten Anwendungsfällen Rechnung getragen werden kann.

Beispielsweise können beim Ändern der dem Netzzugang zugeordneten Markierung als authentisiert ferner dem Netzzugang zugeordnete Parameter geändert werden, wie beispielsweise eine Lebensdauer des für eine gesicherte Kommunikation verwendeten Schlüsselmaterials oder eine jeweilige Filterregel für den Benutzer im Zugangsnetz.

Beispielsweise wird das Funkkommunikationssystem durch ein WiMAX-Netz mit WiMAX-fähigen Endgeräten realisiert, wobei vorzugsweise die Markierung für den Netzzugang in einem WiMAX RADIUS Attribut realisiert ist. Das Verfahren zum Durchführen einer vereinfachten Netzanmeldung in einem Funkkommunikationssystem kann dadurch stark vereinfacht werden.

Obwohl vorzugsweise ein Benutzer-authentisierter Netzzugang als authentisierter Netzzugang verwendet wird, können grundsätzlich auch Kombinationen hiervon mit einem Geräte-authentisierten Netzzugang durchgeführt werden. Ferner können beispielsweise auch WLAN-Netze mit WLAN-fähigen Endgeräten und Kombinationen hiervon mit WiMAX-Netzen realisiert werden, was eine Flexibilität und eine Anzahl von Einsatzmöglichkeiten erhöht.

Die Erfindung wird nachstehend anhand eines Ausführungsbeispiels unter Bezugnahme auf die Zeichnung näher beschrieben.

Es zeigen:
- Figur 1: eine vereinfachte Blockdarstellung einer WiMAX-NWG Referenz-Architektur gemäß dem Stand der Technik;
- Figur 2: eine vereinfachte Darstellung eines Statusdiagramms für eine WiMAX-NWG-Netzanmeldung gemäß dem Stand der Technik; und
- Figur 3: eine vereinfachte Darstellung eines Statusdiagramms für eine WiMAX-NWG-Netzanmeldung gemäß der vorliegenden Erfindung.

Die vorliegende Erfindung offenbart ein Verfahren zum Durchführen einer vereinfachten Netzanmeldung in einem Funkkommunikationssystem, wie es beispielsweise in einem WiMAX- oder WLAN-Netz bei Benutzern durchgeführt werden kann, die noch nicht über geeignete Subskriptionsdaten verfügen und somit noch nicht authentisiert sind. Insbesondere stellt die Erfindung eine Lösung dar, wie die vorstehend genannte doppelte Netzanmeldung vermieden werden kann.

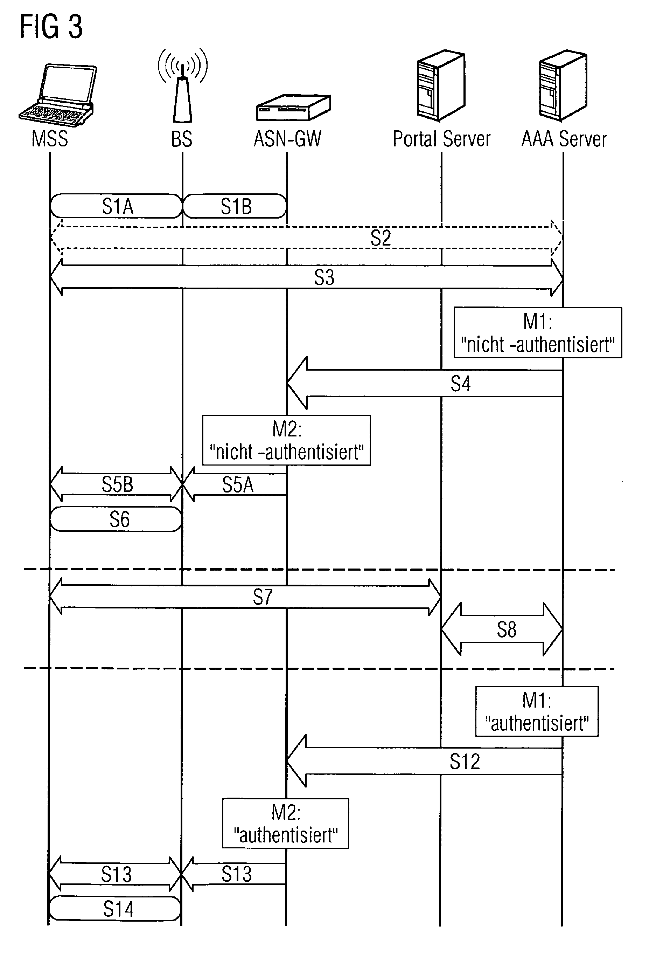

Figur 3 zeigt eine vereinfachte Darstellung eines Statusdiagramms für eine vereinfachte WiMAX-Netzanmeldung gemäß der vorliegenden Erfindung, wobei gleiche Bezugszeichen gleiche oder entsprechende Elemente bzw. Schritte wie in Figuren 1 und 2 bezeichnen, weshalb auf eine wiederholte Beschreibung nachfolgend verzichtet wird.

Gemäß der vorliegenden Erfindung bekommt ein Benutzer mit einem WiMAX-fähigen Endgerät MSS (Mobile Subscriber Station) zunächst einen nicht-authentisierten Netzzugang zum WiMAX-Netz, wobei zumindest der Benutzer dabei nicht authentisiert ist. Genauer gesagt kann wie beim Stand der Technik in einem Schritt S1A und S1B ein Link-Setup sowie eine Link Activation vom Endgerät MSS zur Basisstation BS und von der Basisstation BS zum Netzzugangs-Gateway ASN-GW durchgeführt werden. Beispielsweise wird in einem WiMAX-Netz dieser Initialisierungsvorgang gemäß IEEE802.16-2005 und "NWG Stage-3" durchgeführt.

Der von IEEE definierte IEEE802.16 Standard und die vom WiMAX-Forum definierte Netzarchitektur nach "NWG Stage-3) stellen hierbei lediglich eine Möglichkeit zur Realisierung eines entsprechenden Funkkommunikationssystems dar. Die Erfindung ist jedoch nicht darauf beschränkt und umfasst in gleicher Weise auch alternative Funkstandards wie sie beispielsweise zur Definition von WLAN-Netzen und ähnlichen funkbasierten Netzen zur Verfügung stehen oder noch entworfen werden.

Im optionalen Schritt S2 besteht wiederum die Möglichkeit, einen Geräteauthentisierungsschritt beispielsweise mittels EAP zu realisieren. Dieses "Extensible Authentication Protocol, EAP" wurde eingangs bereits beschrieben und kann beispielsweise zur Realisierung einer "Link-Layer"-Sicherheit verwendet werden. Wiederum befinden sich die entsprechenden technischen Details im Standard IEEE802.16 oder in dem von der Networkworkinggroup (NWG) des WiMAX-Forums festgelegten Spezifikationsentwurf "NWG Stage-3".

Im Schritt S3 wird demzufolge ein nicht-authentisierter Netzzugang zwischen dem Endgerät MSS und dem Netz und insbesondere dessen AAA-Server (Authorization, Authentication, Accounting) aufgebaut, dessen Funktionsweise ebenfalls bereits eingangs beschrieben wurde. Beispielsweise wird dieser nicht-authentisierte Netzzugang mittels eines gesicherten EAP-Verfahrens hergestellt.

Sobald der nicht-authentisierte Netzzugang erfolgreich realisiert ist, erfolgt eine Markierung der EAP-Sitzung als "nicht-authentisiert" oder "temporär". Beispielsweise kann eine erste Markierung im AAA-Server als "nicht-authentisiert" gesetzt und dem aktuellen Netzzugang zugeordnet werden. In einem Schritt S4 wird der erfolgreiche nicht-authentisierte Netzzugang dem Gateway ASN-GW bestätigt und beispielsweise entsprechendes Schlüsselmaterial mit einem MSK-Schlüssel und weiteren Schlüsseln zur Verfügung gestellt. Hierbei kann im Zugangsnetz und insbesondere im Zugangsnetz-Gateway ASN-GW eine zweite Markierung M2 als "nicht-authentisiert" gesetzt werden, welche wiederum dem aktuellen Netzzugang zugeordnet ist.

Im Schritt S5A und S5B können wiederum die zugehörigen Schlüssel AK generiert und TEK für den gesicherten Netzzugang an das Endgerät weitergegeben werden. Beispielsweise erfolgt diese Weitergabe gemäß IEEE802.16 3-way-handshake-Verfahren. In einem Schritt S6 ist somit eine gesicherte Schicht-2-Kommunikation mittels eines nicht-authentisierten Netzzugangs realisiert.

Der Benutzer kann demzufolge in einem Schritt S7 wiederum eine Portalseite wie beispielsweise eine Webseite des Portal-Servers erreichen und somit eine Authentisierung und Registrierung mit der Portalseite durchführen.

Gemäß Schritt S8 steht hierbei der Portal-Server mit dem AAA-Server in Verbindung, wobei der "Authorization, Authentication und Accounting"-zuständige AAA-Server bei erfolgreicher Registrierung die Subskriptionsdaten vom Portal-Server erhält. Der Portalserver stellt diese ebenfalls für den Benutzer bzw. das mobile Endgerät MSS zur Verfügung. Im Schritt S8 können weiterhin beispielsweise Authentisierungsschlüssel, jeweilige Policies, Benutzeridentifikationen usw. übertragen werden.

Genauer gesagt teilt gemäß Schritten S7 und S8 der Portal-Server bzw. eine damit verbundene (nicht dargestellte) Authentisierungsinfrastruktur dem AAA-Server mit, an dem die EAP-Methode für den nicht-authentisierten Netzzugang terminiert ist, dass der Benutzer nun erfolgreich authentisiert bzw. registriert wurde und über gültige Authentisierungsdaten verfügt. Hierbei teilt der Portal-Server dem AAA-Server eine Nutzeridentität mit, die es dem AAA-Server ermöglicht, die existierende EAP-Sitzung zu identifizieren und diese der Authentisierung mit der Portalseite und der daraus resultierenden Subskription zuzuordnen. Dies kann beispielsweise gemeinsam mit dem Senden der neuen Subskriptionsdaten an den AAA-Server durchgeführt werden.

Der AAA-Server setzt nunmehr den Zustand der Markierung des Netzzugangs von nicht-authentisiert (oder Gast-Zugang) auf "authentisiert" herauf. Beispielsweise kann die der existierenden EAP-Sitzung bzw. dem aktuellen Netzzugang zugeordnete erste Markierung M1 im AAA-Server als "authentisiert" aktualisiert werden. Der AAA-Server kann dem Zugangsnetz bzw. dessen Zugangsnetz-Gateway ASN-GW und sofern erforderlich einem involvierten besuchten Netz (visited CSN) diese Statusänderung für diesen Benutzer bzw. diese Sitzung in einem Schritt S12 mitteilen. Hierbei können wiederum auch Schlüsselmaterial wie MSK-Schlüssel und andere Schlüssel für den gesicherten Netzzugang an das Zugangsnetz übermittelt werden. Auf diese Weise kann auch die zweite Markierung M2 im Zugangsnetz-Gateway ASN-GW auf "authentisiert" aktualisiert werden.

In einem Schritt S13A und S13B können daraufhin wiederum die zugehörigen Schlüssel wie beispielweise AK-Schlüssel an die Basisstation BS und ein TEK-Schlüssel an das Endgerät MSS weitergegeben werden, wobei wiederum beispielsweise ein gemäß 802.16 spezifiziertes Handshake-Verfahren verwendet wird.

Im Schritt S14 erhält man somit ohne Durchführung einer doppelten Netzanmeldung einen authentisierten Netzzugang, wodurch sich eine signifikante Verbesserung des BenutzerEmpfindens für eine Netzanmeldung ergibt und darüber hinaus die Ressourcen der Funkschnittstelle und des Endgeräts geschont werden.

Als EAP-Authentisierungsmethoden können beispielsweise EAP-TTLS, EAP-AKA oder EAP-TLS verwendet werden. Das EAP-Protokoll ist beispielsweise in IETF RFC3748 spezifiziert, eine ältere Version in RFC2284. Selbstverständlich können neben den vorstehend beschriebenen und für ein WiMAX-Netz ausgelegten Authentisierungsmethoden auch alternative Authentisierungsverfahren verwendet werden.

Im Falle eines Benutzers, der beispielsweise noch keine Subskriptionsdaten für einen vollen (authentisierten) Netzzugang besitzt, kann erfindungsgemäß nach einem entweder offenen (ungeschützten) Netzzugang oder einem nicht-authentisierten Netzzugang (der entweder komplett anonym ist oder nur das Netz authentisiert) über beispielsweise eine der vorstehend beschriebenen EAP-Authentisierungsmethoden an eine Portalseite des Portal-Servers verwiesen werden. Nach erfolgreicher Authentisierung oder Registrierung gegenüber dem Portal erhält der Benutzer daraufhin neue Subskriptionsdaten für den Netzzugang, wobei der Netzzugang nunmehr als authentisiert markiert wird und entsprechende Eigenschaften aufweist.

Gemäß Figur 3 kann der Schritt S8 dadurch realisiert werden, dass ein Interface zwischen dem Portal-Server und dem AAA-Server realisiert ist, sofern die Portal-Funktionalität und die AAA-Funktionalität nicht auf demselben Server realisiert sind. Beispielsweise kann dieses Interface das RADIUS- oder Diameter-Protokoll im WiMAX-Standard darstellen. Im Rahmen einer derartigen Kommunikation können dem AAA-Server ebenfalls die neuen Subskriptionsdaten für den Benutzer mitgeteilt werden, die dieser für weitere Anmeldungen am WiMAX-Netz benötigt und im neuen Nutzerprofil hinterlegt.

Als Identität, die der AAA-Server benötigt, um die bereits existierende EAP/AAA-Sitzung zu identifizieren und an die neue Subskription zu binden, kann das Endgerät MS im Rahmen der Kommunikation mit dem Portal-Server im Schritt S7 den Netzzugriffs-Identifizierer NAI (Network Access Identifier) der bestehenden EAP-Sitzung für den Netzzugang an den Portal-Server senden. Der Portal-Server kann diesen Netzzugriffs-Identifizierer NAI an den AAA-Server übertragen.

Alternativ oder zusätzlich können anstatt des Netzzugriffs-Identifizierers NAI auch andere Parameter verwendet werden, die dem Endgerät und dem AAA-Server als Resultat der EAP-Sitzung gemeinsam bekannt sind.

Beim Aktualisieren des Zustands der aktuellen EAP/AAA-Sitzung des Benutzers bzw. der Markierungen M1 und M2 von "nicht-authentisiert" auf "authentisiert", können beispielsweise damit verbundene Parameter, wie z.B. eine kurze Lebensdauer des AAA-Schlüsselmaterials für einen nicht-authentisierten Zugang auf neue Werte, z.B. eine lange Lebensdauer, für einen authentisierten Netzzugang angepasst werden. Diese ist z.B. erforderlich, wenn der AAA-Server für nicht-authentisierten Netzzugang eine spezielle Policy vorschreibt.

Im Schritt S12 teilt der AAA-Server die Statusänderung der Markierung M1 dem lokalen Zugangsnetz bzw. dessen Gateway ASN-GW mit. Dies kann beispielsweise durch das Senden einer RADIUS-Nachricht CoA (Change-of-Authorization, RFC3517) vom AAA-Server an das Gateway ASN-GW des Zugangsnetzes realisiert werden. Diese Nachricht enthält beispielsweise folgende Informationen:
- eine Identifikation des Benutzers (z.B. Netzzugriffs-Identifizierer NAI) und AAA-Session-ID der Sitzung, die aus dem nicht-authentisierten EAP resultiert.
- eine Änderung des Authentisierungsstatus (z.B. "authenticated").
- geänderte Parameter für den neuen Status der Sitzung, wie beispielsweise eine neue Lebensdauer des Schlüsselmaterials.
- neue Filterregeln für den Benutzer, die im Zugangsnetz installiert werden. Diese bewirken beispielsweise, dass bisherige Filter für den nicht-authentisierten Netzzugang (z.B. nur Zugang zum Portal) durch Filter für vollen Zugang zum gesamten Internet ersetzt werden.

Gemäß der vorliegenden Erfindung kann beispielweise ein neues WiMAX RADIUS-Attribut "Authentication-Status" eingeführt werden, das die Werte "unauthenticated" bzw. nicht-authentisiert und "authenticated" bzw. authentisiert annehmen kann.

Sollen im Rahmen der Erfindung sogenannte "Man-in-the-middle"-Attacken unterbunden werden, so kann beispielsweise vom Endgerät MSS bzw. dem Benutzer eine EAP-basierte Authentisierung des Netzes vor dem Netzzugang zum Portal durchgeführt werden.

Die Erfindung wurde vorstehend anhand eines WiMAX-Netzes mit WiMAX-fähigen Endgeräten beschrieben. Die Erfindung ist jedoch nicht darauf beschränkt und umfasst in gleicher Weise auch alternative Netze wie beispielsweise ein WLAN-Netz und zugehörige alternative Endgeräte wie beispielsweise WLANfähige Endgeräte.

Ferner ist die Erfindung nicht auf ein homogenes Netz beschränkt, sondern kann in gleicher Weise auch inhomogene Netze bzw. Kombinationen hiervon aufweisen. Beispielsweise kann das Netz ein WLAN-Zugangsnetz darstellen, während der restliche Teil des Netzes WiMAX-Netze aufweist und umgekehrt.

Ferner kann das Endgerät MSS des Benutzers einen sogenannten Multihop-Zugang verwenden, bei dem die erste Funkstrecke eine WLAN-Verbindung mit einem Gerät ist, das selbst eine WiMAX-Verbindung zum WiMAX-Netz hat. In diesem Fall wird die Information des AAA-Servers über die Statusänderung des Nutzers vom Zugangsnetz an das Gerät weitergeleitet, das dann bezüglich des EAP Protokolls die Rolle des Authenticators entsprechend dem Zugangsnetz-Gateway ASN-GW übernimmt.

Die Erfindung wurde vorstehend anhand einer EAP-basierten Kommunikation zur Portal-Seite beschrieben. Sie ist jedoch nicht darauf beschränkt und umfasst in gleicher Weise eine drahtlose Verbindung, welche eine ungesicherte Kommunikation ermöglicht.

Die Erfindung wurde vorstehend im Rahmen einer Benutzerauthentisierung (User Authentication) beschrieben. Sie ist jedoch nicht darauf beschränkt und umfasst in gleicher Weise auch eine Geräteauthentisierung (Device Authentication).

Ebenfalls ist es möglich, die Lösung für das sogenannte Double-EAP einzusetzen, bei dem eine kombinierte Geräte- und Benutzerauthentisierung mit zwei verbundenen EAP-Authentisierungen durchgeführt wird.

### Bezugszeichenliste

- 1: Endgerät
- 2: Zugangsnetzwerk-Anbieter
- 3: Anbieter des besuchten Netzes
- 4: Anbieter des Heimat-Netzes
- 5, 6: IP-basierte Netze
- 7, 8: Zugangsnetze
- 9, 10: Connectivity Service Network
- R1 bis R5: Referenzpunkte
- MSS: Mobile Teilnehmerstation
- BS: Basisstation
- ASN-GW: Zugangsnetz-Gateway
- S1 bis S14: Verfahrensschritte
- M1, M2: Markierungen

## Patentansprüche

1. Verfahren zum Durchführen einer Netzanmeldung in einem Funkkommunikationssystem mit den Schritten:
Realisieren eines nicht-authentisierten Netzzugangs (S3); Setzen einer Markierung (M1, M2) für den Netzzugang als nicht-authentisiert;
Durchführen einer Authentisierung des Benutzers und/oder Geräts über den nicht-authentisierten Netzzugang (S7, S8); Zuordnen des authentisierten Benutzers und/oder Geräts zu dem nicht-authentisierten Netzzugang; und
Ändern der Markierung (M1, M2) des Netzzugangs als authentisiert, wenn die Authentisierung des Benutzers und/oder Geräts erfolgreich war.

2. Verfahren nach Patentanspruch 1, **dadurch gekennzeichnet, dass** das Setzen/Ändern der Markierung (M1, M2) für den Netzzugang ein Setzen/Ändern einer ersten Markierung (M1) in einem AAA-Server und davon abhängig ein Setzen/Ändern einer zweiten Markierung (M2) in einem Zugangsnetz des Funkkommunikationssystems darstellt.

3. Verfahren nach Patentanspruch 1 oder 2, **dadurch gekennzeichnet, dass** der nicht-authentisierte Netzzugang (S3) eine EAP-basierte Kommunikation aufweist.

4. Verfahren nach Patentanspruch 1 oder 2, **dadurch gekennzeichnet, dass** der nicht-authentisierte Netzzugang (S3) eine ungesicherte Kommunikation aufweist.

5. Verfahren nach einem der Patentansprüche 1 bis 4, **dadurch gekennzeichnet, dass** beim Ändern der Markierung (M1, M2) als authentisiert ferner Parameter des Netzzugangs geändert werden.

6. Verfahren nach Patentanspruch 5, **dadurch gekennzeichnet, dass** der Parameter eine Lebensdauer des verwendeten Schlüsselmaterials darstellt.

7. Verfahren nach Patentanspruch 5 oder 6, **dadurch gekennzeichnet, dass** der Parameter eine Filterregel für den Benutzer und/oder das Gerät im Zugangsnetz darstellt.

8. Verfahren nach einem der Patentansprüche 1 bis 7, **dadurch gekennzeichnet, dass** das Funkkommunikationssystem ein WiMAX-Netz mit WiMAX-fähigen Endgeräten (1) aufweist.

9. Verfahren nach Patentanspruch 8, **dadurch gekennzeichnet, dass** die Markierung (M1, M2) für den Netzzugang in einem WiMAX-RADIUS-Attribut realisiert wird.

10. Verfahren nach einem der Patentansprüche 1 bis 7, **dadurch gekennzeichnet, dass** das Funkkommunikationssystem ein WLAN-Netz mit WLAN-fähigen Endgeräten (1) aufweist.

11. Verfahren nach einem der Patentansprüche 1 bis 7, **dadurch gekennzeichnet, dass** das Funkkommunikationssystem ein WiMAX-Netz mit WLAN-Zugangsnetz (2) und WLAN-fähigen Endgeräten (1) aufweist.

12. Verfahren nach einem der Patentansprüche 1 bis 11, **dadurch gekennzeichnet, dass** der authentisierte Netzzugang ein Benutzer- und/oder Geräte-authentisierter Netzzugang ist.
